# FASCICULE DE BREVET EUROPEEN

(11) **EP 3 356 737 B1**
(45) Date de publication et mention de la délivrance du brevet: **25.05.2022**
(21) Numéro de dépôt: 16770706.6
(22) Date de dépôt: 13.09.2016
(51) Int. Cl.: F23R 3/16, F23R 3/44, F23R 3/00, F23L 15/04, F23C 9/00, F23R 3/36

(54) **TURBINE A CYCLE THERMODYNAMIQUE AVEC RÉCUPÉRATEUR, POUR LA PRODUCTION D'ÉNERGIE ÉLECTRIQUE**
THERMODYNAMISCHE KREISLAUFTURBINE MIT REKUPERATOR, ZUR ERZEUGUNG VON ELEKTRISCHER ENERGIE
THERMODYNAMIC CYCLE TURBINE WITH RECUPERATOR, FOR PRODUCING ELECTRICAL ENERGY

(30) Priorité: 30.09.2015 FR 1559314
(43) Date de publication de la demande: 08.08.2018
(73) Titulaire: IFP Energies nouvelles, 69360 Solaize (FR)
(72) Inventeur: BAYA TODA, Hubert, 75019 Paris (FR); MICHEL, Jean-Baptiste, 92500 Rueil Malmaison (FR); THIRIOT, Julien, 92500 Rueil Malmaison (FR); VALIN, Thomas, 94300 Vincennes (FR)
(74) Mandataire: IFP Energies nouvelles
(86) Numéro de dépôt international: PCT/EP2016/071533
(87) Numéro de publication internationale: WO 2017/055074

(56) Documents cités:
- EP-A1- 1 217 297
- WO-A1-2012/039611
- WO-A1-2012/039611
- GB-A- 624 779
- US-A- 2 517 015
- US-A- 2 621 477
- US-A- 3 754 393

## Description

La présente invention se rapporte à une turbine à cycle thermodynamique avec récupérateur, pour la production d'énergie électrique.

Elle concerne plus particulièrement une microturbine avec récupérateur pour la production d'électricité à partir d'un combustible liquide ou gazeux.

Généralement, il est entendu par microturbine une turbine de petite puissance usuellement inférieure à 200KW.

Comme mieux décrit dans la demande WO 2012/039611, une turbine avec récupérateur comprend généralement au moins un étage de compression avec au moins un compresseur, une chambre de combustion (ou brûleur), au moins un étage de détente avec au moins une turbine de détente, un dispositif d'échange de chaleur (ou récupérateur) entre le compresseur et le brûleur permettant de chauffer les gaz comprimés par le compresseur pour les envoyer avec une température élevée au brûleur, ce dispositif d'échange étant parcouru par les gaz chauds provenant de la turbine.

Tel que cela est décrit dans la demande précitée, le brûleur comprend un boîtier extérieur au travers duquel circule l'air comprimé chaud provenant du récupérateur et d'un tube à flamme, situé à l'intérieur de ce boîtier, au sein duquel a lieu la combustion.

Le tube à flamme comprend une zone primaire qui reçoit une partie du débit d'air comprimé chaud total et dans laquelle se produit la combustion et une zone de dilution où a lieu le mélange entre les gaz brûlés issus de la zone primaire et des gaz comprimés chauds provenant de trous de dilution prévus sur le tube.

La zone primaire comprend en outre un diffuseur perforé permettant le passage de l'air comprimé chaud ainsi que du combustible provenant d'un système d'injection de combustible (liquide ou gazeux) placé en amont du diffuseur.

Généralement, une turbine avec récupérateur présente un faible taux de compression (de l'ordre de 3 à 5 bars de pression) et des températures faibles en entrée de la turbine en comparaison des turbines à gaz aéronautiques ou stationnaires hautes puissances.

L'une des conséquences de ces caractéristiques de fonctionnement est la richesse globale dans la chambre de combustion, inférieure à 0,20 en général, c'est-à-dire en-deçà des limites d'inflammabilité du combustible.

De plus, se pose le problème de la pré-vaporisation du combustible dans le cas d'un combustible liquide.

Généralement, le mode de combustion permettant d'atteindre de faibles émissions est la combustion pré-mélangée avec richesse pauvre.

Cependant, ce type de combustion pose d'importants problèmes quant à la stabilisation de la flamme. Ces problèmes sont d'autant plus renforcés par l'action du récupérateur qui augmente la température de l'air en entrée du brûleur en accentuant les risques d'instabilité de la flamme.

De plus, le coût de conception est également un verrou. En effet, ce type de chambre est caractérisé par une forte interaction entre la flamme et la paroi ce qui nécessite le choix de matériaux onéreux sur un important volume et un système de refroidissement des parois du brûleur généralement constitué de multiple trous servant à créer un coussin d'air entre la flamme et la paroi. Ce système de refroidissement entraine un surcoût non négligeable dans le processus de fabrication ainsi qu'une complexité de réalisation.

Tous ces inconvénients rendent difficile une combustion complète et respecter les exigences de faibles émissions en terme de d'oxydes d'azote (NOx), d'oxyde de carbone (CO), d'hydrocarbures imbrûlés (HC) et de particules (PM).

La présente invention se propose de remédier aux inconvénients précités avec une turbine à cycle thermodynamique avec récupérateur pourvue d'une chambre de combustion peu polluante et à faible coût de conception.

A cet effet, la présente invention propose une turbine à cycle thermodynamique avec récupérateur, conforme à la revendication 1.

Le tube de mélange du diffuseur perforé peut être porté par des bras relié au diffuseur perforé en étant à distance du diffuseur perforé.

Le tube de mélange du diffuseur perforé peut être porté par des bras relié au tube à flamme en étant à distance du diffuseur perforé.

Le passage de recirculation peut être formé entre le diffuseur perforé et le tube de mélange.

Le boîtier peut comprendre une paroi déflectrice pour diriger l'air comprimé chaud vers le tube à flamme.

La paroi déflectrice peut comprendre une paroi semi-torique avec une concavité dirigée vers le tube à flamme.

La chambre de combustion peut comprendre un moyen d'injection multi-combustibles.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est un schéma illustrant une turbine selon l'invention pour la production d'énergie électrique,
- la figure 2 qui est une vue en coupe axiale montrant la chambre de combustion de la turbine selon l'invention,
- la figure 3A qui est une vue en perspective d'un élément de la chambre de combustion de la turbine selon l'invention avec un vue frontale (figure 3B) et une vue en coupe (figure 3C), et
- la figure 4 qui est une vue en coupe montrant un autre élément de la chambre de combustion de la turbine selon l'invention.

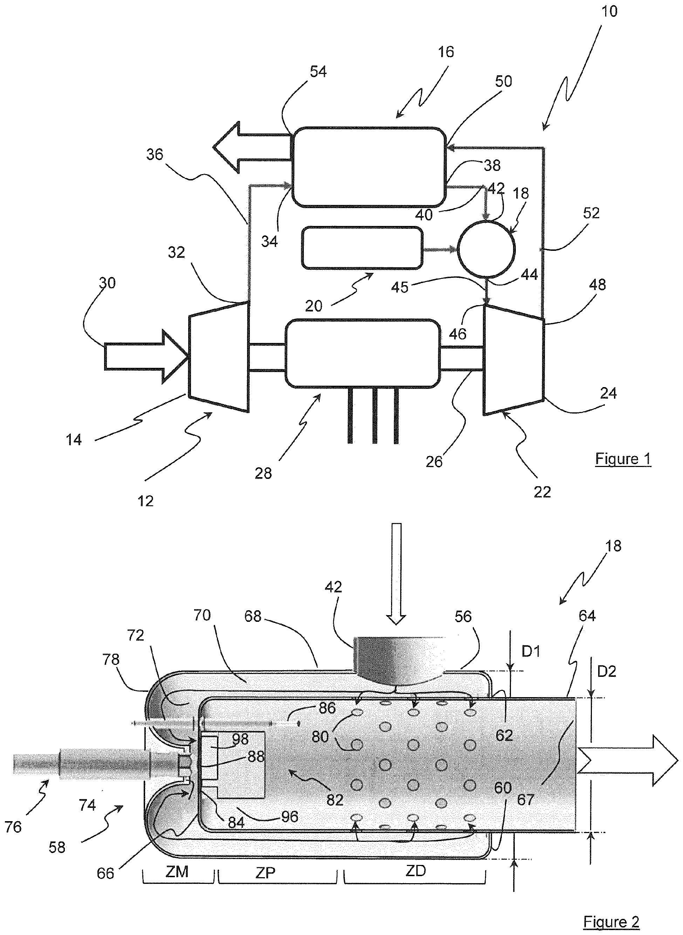

Sur la figure 1, la turbine illustrée est plus particulièrement une microturbine 10, fonctionnant à partir d'au moins un combustible, tel qu'un combustible liquide, par exemple de type gazole, ou un combustible gazeux, tel que du gaz naturel.

La turbine comprend au moins un étage de compression 12 avec au moins un compresseur de gaz 14, un échangeur de chaleur 16 (ou récupérateur), une chambre de combustion 18 (ou brûleur) alimentée en combustible par au moins un réservoir 20, au moins un étage de détente 22 avec au moins une turbine de détente 24 reliée par un arbre 26 au compresseur. Cette turbine comprend également un moyen de production d'énergie électrique, qui comprend une génératrice électrique 28 placée avantageusement sur l'arbre 26 entre le compresseur et la turbine.

Bien entendu, cette génératrice peut être alternativement reliée à la turbine de détente ou au compresseur par un arbre autre que celui reliant la turbine et le compresseur.

L'échangeur de chaleur (16) est un échangeur à flux croisés, par exemple de type tubes-calandre ou à plaques alternées avec deux entrées et deux sorties.

Le compresseur 14 comprend une entrée 30 de gaz frais contenant de l'oxygène, ici de l'air extérieur généralement à température ambiante, et une sortie d'air comprimé 32 aboutissant à une entrée d'air comprimé 34 de l'échangeur 16 par une ligne 36. La sortie d'air comprimé chaud 38 de cet échangeur est reliée par une ligne 40 à une admission d'air comprimé chaud 42 du brûleur 18. La sortie de gaz surchauffés 44 du brûleur est connectée par une ligne 45 à l'entrée 46 de la turbine dont la sortie 48 est reliée à une autre entrée 50 de l'échangeur par une ligne de gaz surchauffés détendus 52. L'échangeur 16 comprend également une sortie de gaz refroidis 54 pour être dirigés vers tous moyens d'évacuation et de traitement, comme une cheminée (non représentée).

En se rapportant à la figure 2, le brûleur 18 comprend un boîtier extérieur 56, de forme cylindrique de diamètre D1, fermé à l'une de ses extrémités par une cloison porte-injecteur 58 et à l'autre de ses extrémités par une cloison annulaire 60 avec une ouverture 62 de diamètre intérieur D2. Ce brûleur comprend également un tube à flamme 64, également de forme sensiblement cylindrique, logé coaxialement dans le boîtier en étant de diamètre inférieur au boîtier mais de diamètre identique à celui de l'ouverture 62 de la cloison annulaire 60. Ce tube comprend une extrémité fermée par une cloison de diffusion 66 en regard et à distance de la cloison porte-injecteur 58 et une extrémité ouverte 67 qui traverse la cloison annulaire en coopérant à étanchéité avec le diamètre intérieur de cette cloison annulaire pour former la sortie 44 de ce brûleur.

Le boîtier porte, sur sa périphérie 68 et à proximité de la cloison annulaire 60, l'admission d'air comprimé chaud 42 pour introduire cet air dans l'espace 70 formé entre le boîtier et le tube à flamme ainsi que dans l'espace 72 formé entre la cloison porte-injecteur et la cloison de diffusion.

Comme mieux illustré sur la figure 2, la cloison porte-injecteur comprend une plaque 74, au travers de laquelle est monté un moyen d'injection d'au moins un combustible 76, ici sous la forme d'un injecteur coaxial au tube à flamme. Cette plaque est entourée d'une paroi déflectrice d'air 78, ici semi-torique dont la concavité est dirigée vers le tube à flamme et qui est reliée à la périphérie 68 du boîtier.

Le tube à flamme comprend des rangées circonférentielles d'orifices de dilution radiaux 80 placés à distance de la cloison de diffusion et à proximité de la cloison annulaire du boîtier en étant reparties régulièrement avantageusement en regard de l'admission 42. Ce tube à flamme comprend également un stabilisateur de flamme 82 qui est placé sur la cloison de diffusion 66 et à l'intérieur du tube en étant logé dans un orifice 84 prévu dans cette cloison de diffusion.

Ce stabilisateur de flamme permet de générer des zones de recirculation de gaz brûlés facilitant l'inflammation du combustible et apportant localement des inertes dans la zone de réaction. Il permet également la stabilisation physicochimique de la flamme ainsi que le confinement de la combustion.

Le brûleur comprend également un dispositif d'allumage 86 pour un mélange carburé. A titre d'exemple, ce dispositif peut être une bougie du type pour moteur à combustion interne à allumage commandé, une bougie de préchauffage, des électrodes d'allumage, ....

Dans tous les cas, la position du dispositif d'allumage doit être dans une zone du brûleur qui ne soit pas directement exposée à la flamme afin de le préserver.

De manière préférentielle comme illustré sur la figure 2, l'extrémité active de ce dispositif d'allumage est située juste après le stabilisateur de flamme.

Le brûleur ainsi constitué comprend un tube à flamme avec une zone d'injection/mélange ZM où se réalise le mélange de l'air comprimé chaud avec le combustible et le début de la combustion, une zone primaire ZP dans laquelle se produit la combustion, un zone de dilution ZD où a lieu le mélange entre les gaz brûlés issus de la zone primaire et l'air comprimé chaud provenant des trous de dilution. Cette zone de dilution a pour buts principaux de réduire la température des gaz en sortie de la zone de dilution et de permettre une bonne homogénéisation spatiale de ceux-ci avant de rentrer dans la turbine de détente.

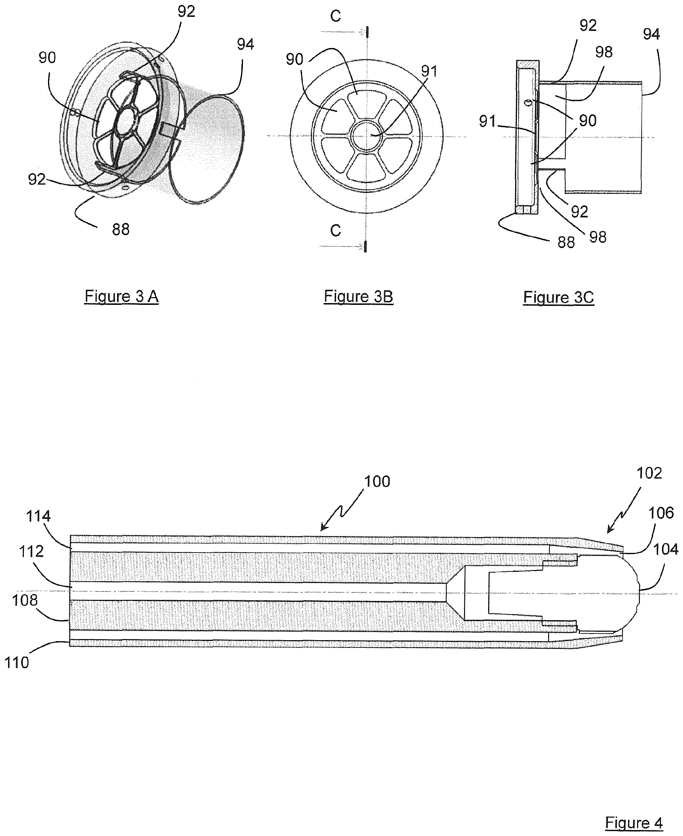

On se rapporte maintenant en plus aux figures 3A à 3C qui illustrent un exemple de réalisation de stabilisateur de flamme.

Ce stabilisateur comprend un diffuseur perforé sous la forme d'une semelle circulaire plane 88 prévue pour être logée dans l'orifice 84 de la cloison de diffusion 66 et comportant une multiplicité de trous axiaux 90 régulièrement réparties circonférentiellement sur la semelle et un trou axial central 91. Cette semelle se poursuit dans une direction axiale et à l'opposé de la cloison par des bras axiaux 92, ici trois bras disposés à 120° les uns des autres, et portant à leurs extrémités un tube mélangeur 94 d'étendue axiale limitée pour arriver au début de la zone primaire ZP et de diamètre extérieur inférieur au diamètre intérieur du tube à flamme 64.

Il se crée ainsi un passage axial libre 96 entre la périphérie externe du tube mélangeur et la périphérie interne du tube à flamme (voir figure 2) ainsi qu'au moins un passage radial de recirculation 98, ici trois, entre la semelle, le tube mélangeur et les bras.

En fonctionnement, le combustible, ici sous forme liquide, est injecté par l'injecteur 76 en direction de la semelle perforée 88 pour traverser le trou central 91. L'air comprimé chaud provenant de l'admission 42 pénètre dans l'espace 72 entre les cloisons, est ensuite dévié par la paroi déflectrice 78 pour traverser les trous 90 de la semelle et est dirigé dans le tube mélangeur 94 dans lequel a lieu l'évaporation du combustible liquide, puis la combustion.

Ce stabilisateur permet ainsi de faciliter la vaporisation du combustible en amenant une partie des gaz brûlés de la zone primaire ZP, inertes et chauds, vers le jet de combustible provenant de l'injecteur au travers des passages de recirculation 98 situées entre la semelle 88 et le tube mélangeur 94 (flèches en traits pointillés sur la figure 2).

L'amélioration de la vaporisation du combustible combinée à un apport de gaz inertes dans la zone de réaction permet ainsi d'obtenir des émissions faibles d'espèces polluantes (NOx, HC, CO et PM).

Bien entendu, le tube de mélange doit être placé à distance de la semelle e façon à ce qu'une partie des gaz brûlés de la zone primaire ZP puisent être dirigée vers le jet de combustible au travers de l'espace entre la semelle et le tube de mélange.

Il peut donc être prévu que le tube de mélange soit relié par des bras radiaux au tube à flamme au lieu d'être relié à la semelle.

Dans l'exemple de la figure 2, l'air provenant de l'admission 42 est à contrecourant avec les gaz brûlés de la chambre de combustion, mais il peut être envisagé que cet air soit co-courant avec ces gaz brûlés.

Il peut également être envisagé de placer un moyen de vannage, tel qu'un clapet (non représenté) sur l'admission d'air 42 pour permettre de contrôler la quantité d'air allant dans la zone primaire et dans la zone de dilution.

La figure 4 montre une variante de l'injecteur comme illustré pour le brûleur de la figure 2.

Comme précédemment mentionné, l'injecteur peut être un injecteur multi-combustibles gaz-liquide.

En effet, pour des applications dont le choix du combustible dépend de sa nature (gaz ou liquide), de sa disponibilité, ou de son coût, l'injecteur du brûleur pourrait être adapté.

Pour cela l'injecteur comprend un corps 100 et une tête d'injection 102 avec une buse d'injection 104 pour un combustible et une autre buse d'injection 106 pour un autre combustible.

Le corps est composé de deux tubes concentriques 108, 110 avec une partie centrale 108 munie d'un passage 112 pour injecter un combustible, par exemple sous forme liquide, au travers des buses d'injection 104 et avec un passage périphérique 114 entre les deux tubes pour injecter un combustible d'une autre nature (gaz) par les buses 106.

Bien entendu, cet injecteur est associé à un circuit d'injection de combustibles avec deux réservoirs et les différents organes de commande et/ou de contrôle pour réaliser l'injection de l'un ou l'autre des combustibles.

## Revendications

1. Turbine à cycle thermodynamique avec récupérateur, pour la production d'énergie électrique, comprenant au moins un étage de compression (12) avec au moins un compresseur de gaz (14), une chambre de combustion (18) alimentée en combustible par au moins un réservoir (20), au moins un étage de détente (22) avec au moins une turbine de détente (24) reliée par un arbre (26) au compresseur, et un moyen de production d'énergie électrique (28), la chambre de combustion comportant un boîtier (56) logeant un tube à flamme (64) avec un diffuseur perforé pour le passage de l'air comprimé chaud, une zone primaire (ZP), qui reçoit une partie du débit d'air comprimé chaud et dans laquelle se produit la combustion, et une zone de dilution (ZD) où a lieu le mélange entre les gaz brûlés issus de la zone primaire et la partie restante du débit d'air comprimé chaud, ladite chambre comportant en outre un moyen d'injection (76) d'au moins un combustible, **caractérisée en ce que** le tube à flamme (64) porte un stabilisateur de flamme (82) comprenant le diffuseur perforé (88), au moins un passage de recirculation (98) de gaz de combustion et un tube de mélange (94), le boîtier (56) comprenant une paroi déflectrice (78) pour diriger l'air comprimé chaud vers le tube à flamme, le récupérateur étant un échangeur de chaleur (16) à flux croisés.

2. Turbine selon la revendication 1, **caractérisée en ce que** le tube de mélange (94) du diffuseur perforé est porté par des bras (92) relié au diffuseur perforé (88) en étant à distance du diffuseur perforé.

3. Turbine selon la revendication 1, **caractérisée en ce que** le tube de mélange (94) du diffuseur perforé est porté par des bras (92) relié au tube à flamme (64) en étant à distance du diffuseur perforé.

4. Turbine selon l'une des revendications 1 à 3, **caractérisée en ce que** le passage de recirculation (98) est formé entre le diffuseur perforé (88) et le tube de mélange (94).

5. Turbine selon l'une des revendications précédentes, **caractérisée en ce que** la paroi déflectrice (78) comprend une paroi semi-torique avec une concavité dirigée vers le tube à flamme.

6. Turbine selon la revendication 1, **caractérisée en ce qu'**elle comprend un moyen d'injection multi-combustibles.

## Patentansprüche

1. Turbine mit thermodynamischem Kreislauf mit Rekuperator für die Erzeugung elektrischer Energie, umfassend mindestens eine Verdichtungsstufe (12) mit mindestens einem Gasverdichter (14), einer Brennkammer (18), die durch mindestens einen Vorratsbehälter (20) mit Brennstoff versorgt wird, mindestens eine Entspannungsstufe (22) mit mindestens einer Entspannungsturbine (24), die über eine Welle (26) mit dem Kompressor verbunden ist, und ein Mittel zur Erzeugung elektrischer Energie (28), wobei die Brennkammer ein Gehäuse (56), das ein Flammrohr (64) mit einem perforierten Diffusor für den Durchtritt der heißen verdichteten Luft beherbergt, einen Primärbereich (ZP), der einen Anteil des Durchsatzes heißer verdichteter Luft aufnimmt und in dem die Verbrennung stattfindet, und einen Verdünnungsbereich (ZD), wo die Vermischung zwischen den verbrannten Gasen aus dem Primärbereich und dem restlichen Anteil des Durchsatzes heißer verdichteter Luft erfolgt, aufweist, wobei die Kammer ferner ein Mittel zur Einspritzung (76) mindestens eines Brennstoffs aufweist, **dadurch gekennzeichnet, dass** das Flammrohr (64) einen Flammstabilisator (82) trägt, der den perforierten Diffusor (88), mindestens einen Durchlass zur Rückführung (98) von Verbrennungsgas und ein Mischrohr (94) umfasst, wobei das Gehäuse (56) eine Ableitwand (78) umfasst, um die heiße verdichtete Luft hin zum Flammrohr zu lenken, wobei der Rekuperator ein Kreuzstrom-Wärmetauscher (16) ist.

2. Turbine nach Anspruch 1, **dadurch gekennzeichnet, dass** das Mischrohr (94) des perforierten Diffusors von Armen (92) getragen wird, verbunden mit dem perforierten Diffusor (88), wobei es vom perforierten Diffusor beabstandet ist.

3. Turbine nach Anspruch 1, **dadurch gekennzeichnet, dass** das Mischrohr (94) des perforierten Diffusors von Armen (92) getragen wird, verbunden mit dem Flammrohr (64), wobei es vom perforierten Diffusor beabstandet ist.

4. Turbine nach einem der Ansprüche 1 bis 3, **dadurch gekennzeichnet, dass** der Rückführungsdurchlass (98) zwischen dem perforierten Diffusor (88) und dem Mischrohr (94) ausgebildet ist.

5. Turbine nach einem der vorhergehenden Ansprüche, **dadurch gekennzeichnet, dass** die Ableitwand (78) eine halbtorische Wand mit einer Vertiefung umfasst, die hin zum Flammrohr gerichtet ist.

6. Turbine nach Anspruch 1, **dadurch gekennzeichnet, dass** sie ein Mittel zur Einspritzung mehrerer Brennstoffe umfasst.

## Claims

1. Thermodynamic cycle turbine with recuperator, for the production of electrical energy, comprising at least one compression stage (12) with at least one gas compressor (14), a combustion chamber (18) supplied with fuel by at least one reservoir (20), at least one expansion stage (22) with at least one expansion turbine (24) connected by a shaft (26) to the compressor, and an electrical energy production means (28), the combustion chamber comprising a housing (56) that accommodates a flame tube (64) with a perforated diffuser through which the hot compressed air is intended to pass, a primary zone (ZP) which receives a portion of the flow rate of hot compressed air and in which combustion takes place, and a dilution zone (ZD) where the burnt gases from the primary zone are mixed with the remaining portion of the flow rate of hot compressed air, said chamber further comprising a means (76) for injecting at least one fuel, **characterized in that** the flame tube (64) has a flame holder (82) comprising the perforated diffuser (88), at least one recirculation passage (98) for combustion gases and a mixing tube (94), the housing (56) comprising a deflecting wall (78) for directing the hot compressed air towards the flame tube, the recuperator being a cross-flow heat exchanger (16).

2. Turbine according to Claim 1, **characterized in that** the mixing tube (94) of the perforated diffuser is borne by arms (92) connected to the perforated diffuser (88), being at a distance from the perforated diffuser.

3. Turbine according to Claim 1, **characterized in that** the mixing tube (94) of the perforated diffuser is borne by arms (92) connected to the flame tube (64), being at a distance from the perforated diffuser.

4. Turbine according to one of Claims 1 to 3, **characterized in that** the recirculation passage (98) is formed between the perforated diffuser (88) and the mixing tube (94).

5. Turbine according to one of the preceding features, **characterized in that** the deflecting wall (78) comprises a semi-toric wall with a concavity oriented towards the flame tube.

6. Turbine according to Claim 1, **characterized in that** it comprises a multi-fuel injection means.
